# EUROPÄISCHE PATENTANMELDUNG

(11) **EP 1 014 375 A2**
(43) Veröffentlichungstag der Anmeldung: **28.06.2000**
(21) Anmeldenummer: 99890390.0
(22) Anmeldetag: 17.12.1999
(51) Int. Cl.: G11B 33/04

(54) **Mini-Disk Hülle**

(30) Priorität: 22.12.1998 AT 213298
(71) Anmelder: Sony DADC Austria AG, 5081 Anif (AT)
(72) Erfinder: Maringer, Adolf Ing. c/o Sony DADC Austria AG, 5081 Anif (AT)
(74) Vertreter: Kliment, Peter

(57) **Zusammenfassung**

Um einen Aufbewahrungsbehälter für Mini Discs zu schaffen, welcher unter Beibehaltung der Außenabmessungen bisher verwendeter Behälter die doppelte Anzahl an Mini Discs fassen kann, wobei gleichzeitig der Großteil der bisher verwendeten Bestandteile bereits bekannter Aufbewahrungsbehälter verwendet werden kann, ist vorgesehen, daß ein zweiter Einsatz (7) im Deckelteil (3) gehalten ist, wobei dieser Einsatz (7) ebenfalls eine Ausnehmung (8) zur Aufnahme einer Mini Disc aufweist und die Mini Disc in deren Eckbereichen vorzugsweise durch in der Ausnehmung (8) gelagerte flexible Elemente (9) reibschlüssig gehalten ist und die Ausnehmung (8) im Einsatz (7) des Deckelteiles (3) der Ausnehmung (5) im Einsatz (4) des Bodenteiles (1) bei geschlossenem Aufbewahrungsbehälter zugewandt ist.

## Beschreibung

Die vorliegende Erfindung bezieht sich auf einen Aufbewahrungsbehälter für Mini Discs gemäß dem Oberbegriff des Anspruches 1.

In solchen Aufbewahrungsbehältern werden bereits bespielte Mini Discs verkauft. Anders als bei nicht bespielten Mini Discs, weisen die Aufbewahrungsbehälter für bespielte Mini Discs auch noch Platz für kleine Textbücher bzw. Vorder- und Rückseitencovers auf.

Bei bekannten Aufbewahrungsbehältern für bespielte Mini Discs war es bisher nur möglich eine Mini Disc pro Behälter unterzubringen. Da Mini Discs eine maximale Aufnahmezeit von 74 Minuten haben, kommt es manchmal vor, daß Bedarf besteht, zwei Mini Discs in einem Aufbewahrungsbehälter unterzubringen.

Dabei stellt sich nun das Problem, daß sowohl im Handel als auch in der Produktion sämtliche Regale zum Lagern der Aufbewahrungsbehälter sowie die Werkzeuge wie zum Beispiel Spritzgußmatritzen usw. auf die Abmessungen der bisher verwendeten Aufbewahrungsbehälter ausgerichtet sind. Da es sich bei der Mini Disc um ein noch sehr junges Medium handelt, sind all diese Vorrichtungen und Einrichtung erst kürzlich angeschafft worden. Es wäre somit sowohl für den Handel als auch für den oder die Hersteller gar nicht möglich, nach so kurzer Zeit die noch neuen Vorrichtungen und Einrichtungen schon wieder gegen andere, die sich im wesentlichen nur durch die Abmessung von den alten Unterscheiden, zu ersetzen.

Um bereits bestehende Regalsysteme, die in den verschiedenen Lagerstätten (Hersteller, Vertrieb) bereits vorhanden sind, weiterverwenden zu können, müssen die Außenabmessungen der Aufbewahrungsbehälter für zwei Mini Discs gleich jenen für eine Mini Disc sein. Gleichzeitig sollten aus produktionstechnischen Gründen so viel Teile der bisherigen Aufbewahrungsboxen wie möglich weiterverwendet werden, so daß auch die im Herstellungsprozeß verwendeten Werkzeuge weiterverwendet werden können.

Ziel der Erfindung ist daher ein Aufbewahrungsbehälter für Mini Discs zu schaffen, welcher unter Beibehaltung der Außenabmessungen bisher verwendeter Behälter die doppelte Anzahl an Mini Discs fassen kann, wobei gleichzeitig der Großteil der bisher verwendeten Bestandteile bereits bekannter Aufbewahrungsbehälter verwendet werden kann.

Erfindungsgemäß wird dies durch die kennzeichnenden Merkmale des Anspruches 1 verwirklicht.

Dadurch ist es möglich durch Verwendung bereits bekannter Elemente wie dem Bodenteil, dem Deckelteil und einem Einsatz im Bodenteil, der gegenüber den bisher verwendeten Einsätzen dünner ausgeführt ist, die Außenabmessungen des Aufbewahrungsbehälters beizubehalten, womit der Aufbewahrungsbehälter zusammen mit bestehenden Regalsystemen verwendet werden kann. Durch die Integration eines zweiten Einsatzes in den Deckelteil des Behälters kann der erfindungsgemäße Aufbewahrungsbehälter nun aber zwei Mini Discs fassen. Durch die Anordnung des zweiten Einsatzes im Deckelteil gemäß dem Kennzeichen des Anspruches 1 ergibt sich auch der Vorteil, daß beim Öffnen des Aufbewahrungsbehälters beide Mini Discs gleichzeitig sichtbar sind, somit eine schnelle Auswahl jener Mini Disc mit dem gewünschten Musiktitel möglich ist.

Durch die kennzeichnenden Merkmale des Anspruches 2 ergibt sich der Vorteil, daß die Laschen, welche ursprünglich als Halterung von MD-Vordercovers verwendet wurden, nun auch als Halterung für den Deckeleinsatz verwendet werden können. Es ist daher nicht erforderlich eine neue Spritzgußmatritze zur Herstellung des Deckelteiles zu produzieren. Die Verwendung der Laschen als Halterung für die Vordercovers bleibt weiterhin bestehen (Doppelfunktion). Ein weiterer Vorteil der Merkmale nach Anspruch 2 ist die Tatsache, daß durch das Einsetzen des Einsatzes in den Deckelteil das bereits vorher eingelegte MD-Vordercover nicht beschädigt wird. Würde der Einsatz von vorne in den Deckelteil eingeschoben werden, würde das MD-Vordercover beschädigt werden. Das automatisierte Einsetzen des Einsatzes in Deckelteil von oben ist des weiteren leicht realisierbar, wogegen ein Einschieben von vorne nur mit großem Kraftaufwand möglich und die Automatisation daher schwierig ist.

Die Merkmale des Anspruches 3 kennzeichnen eine Alternativlösung zur Befestigung des zweiten Einsatzes im Deckelteil.

Im folgenden erfolgt nun eine detaillierte Beschreibung einer erfindungsgemäßen Aufbewahrungsbox.

Dabei zeigt:
- Fig. 1: einen Grundriß eines erfindungsgemäßen Aufbewahrungsbehälters in offenem Zustand
- Fig. 2: eine Schnittansicht eines erfindungsgemäßen Aufbewahrungsbehälters entlang der Linie AA in Fig. 1 in geschlossenem Zustand
- Fig. 3: eine Schnittansicht eines erfindungsgemäßen Aufbewahrungsbehälters entlang der Linie BB in Fig. 1 in geschlossenem Zustand
- Fig. 4: einen Grundriß des Bodenteils eines erfindungsgemäßen Aufbewahrungsbehälters
- Fig. 5: einen Seitenriß des Bodenteils eines erfindungsgemäßen Aufbewahrungsbehälters
- Fig. 6: einen Grundriß des Bodeneinsatzes eines erfindungsgemäßen Aufbewahrungsbehälters
- Fig. 7: einen Seitenriß des Bodeneinsatzes eines erfindungsgemäßen Aufbewahrungsbehälters

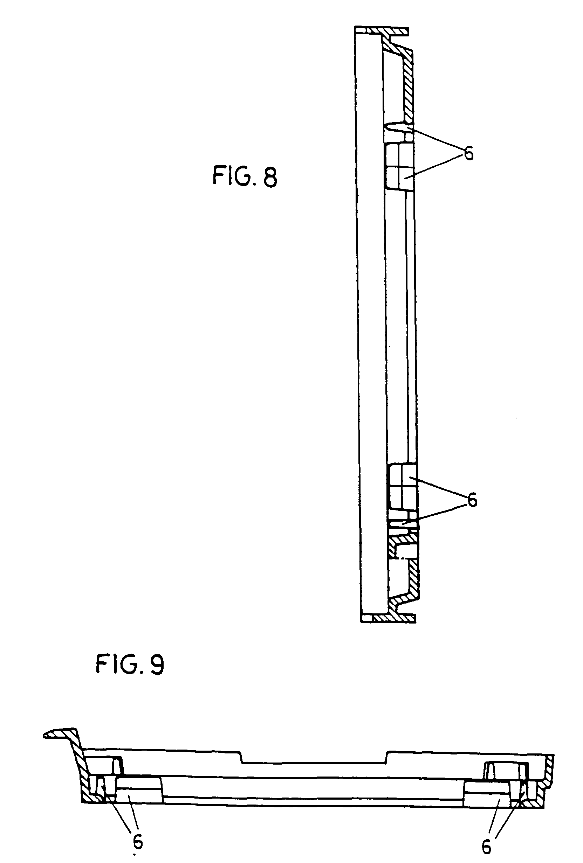

- Fig. 8: eine Schnittansicht des Bodeneinsatzes entlang der Linie AA in Fig. 6 eines erfindungsgemäßen Aufbewahrungsbehälters
- Fig. 9: eine Schnittansicht des Bodeneinsatzes entlang der Linie BB in Fig. 6 eines erfindungsgemäßen Aufbewahrungsbehälters

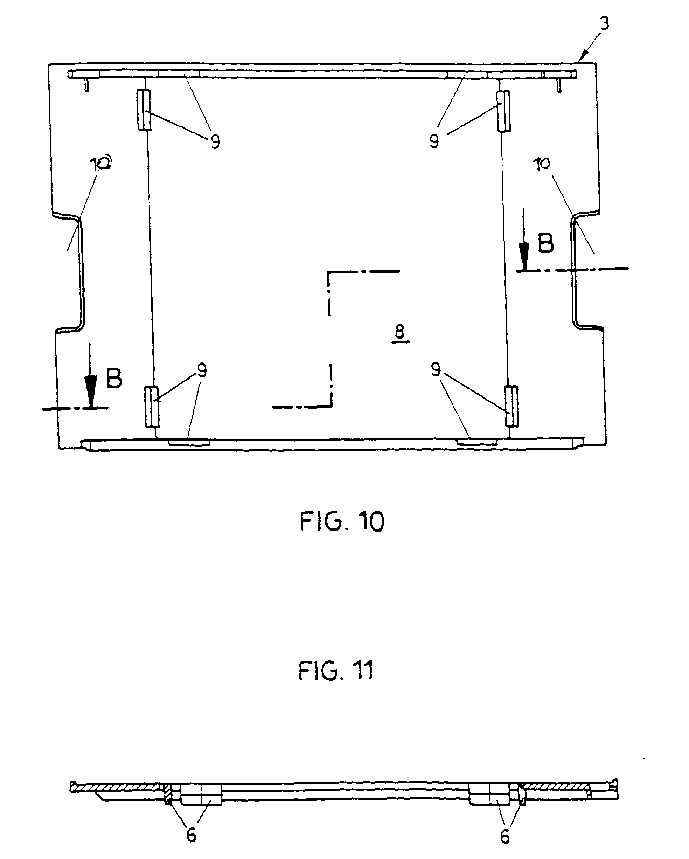

- Fig. 10: einen Grundriß eines erfindungsgemäßen Deckeleinsatzes
- Fig. 11: eine Schnittansicht eines erfindungsgemäßen Deckeleinsatzes entlang der Linie BB in Fig. 10
- Fig. 12: einen Grundriß des Deckels eines erfindungsgemäßen Aufbewahrungsbehälters
- Fig. 13: einen Seitenriß des Deckels eines erfindungsgemäßen Aufbewahrungsbehälters
- Fig. 14: eine Schnittansicht des Deckels entlang der Linie AA aus Fig. 12 eines erfindungsgemäßen Aufbewahrungsbehälters

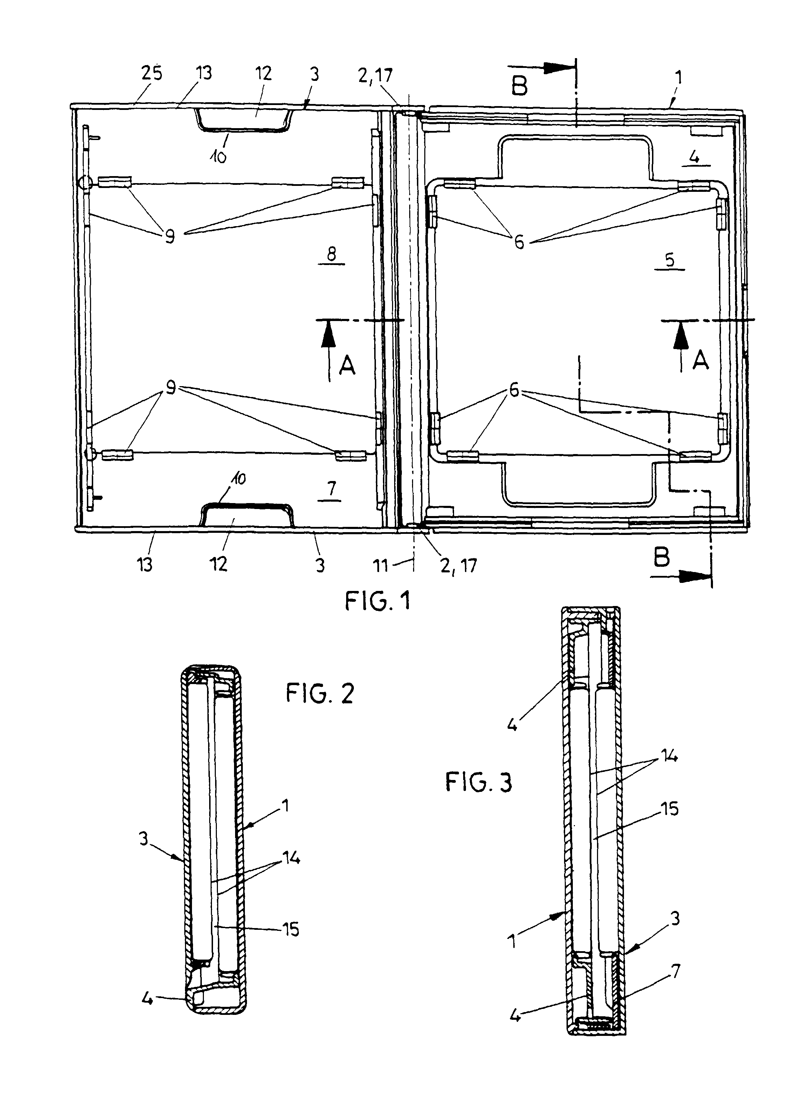

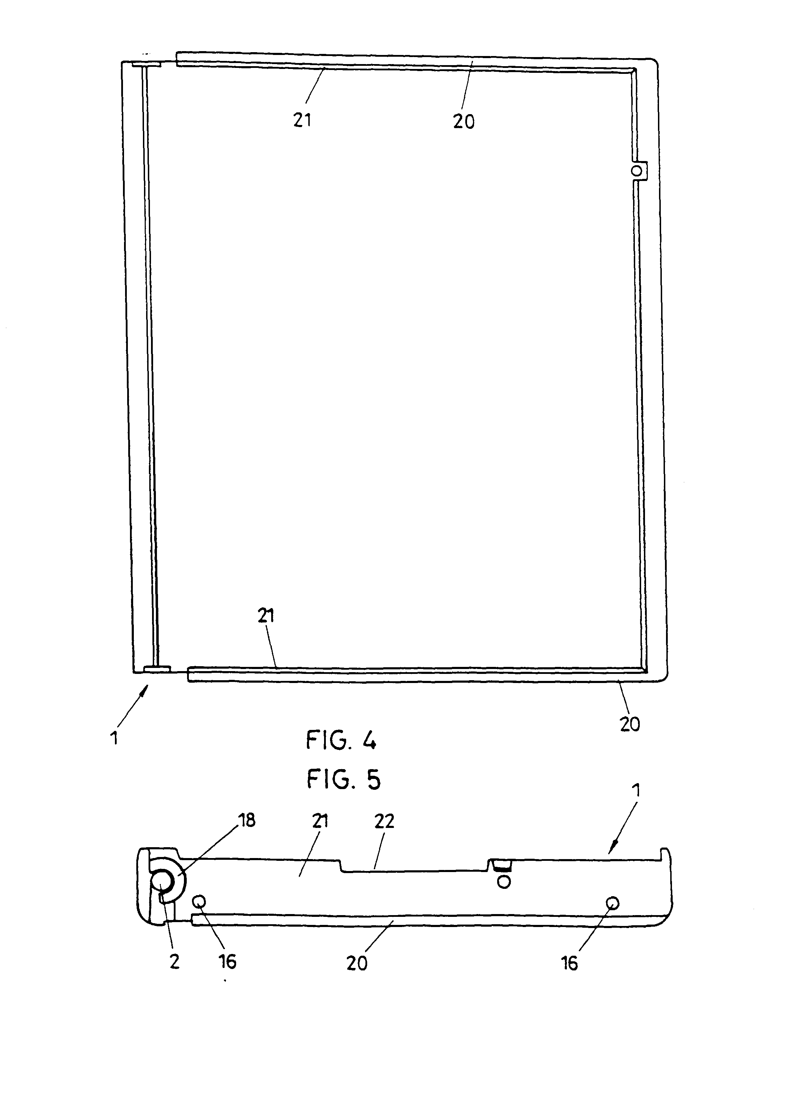

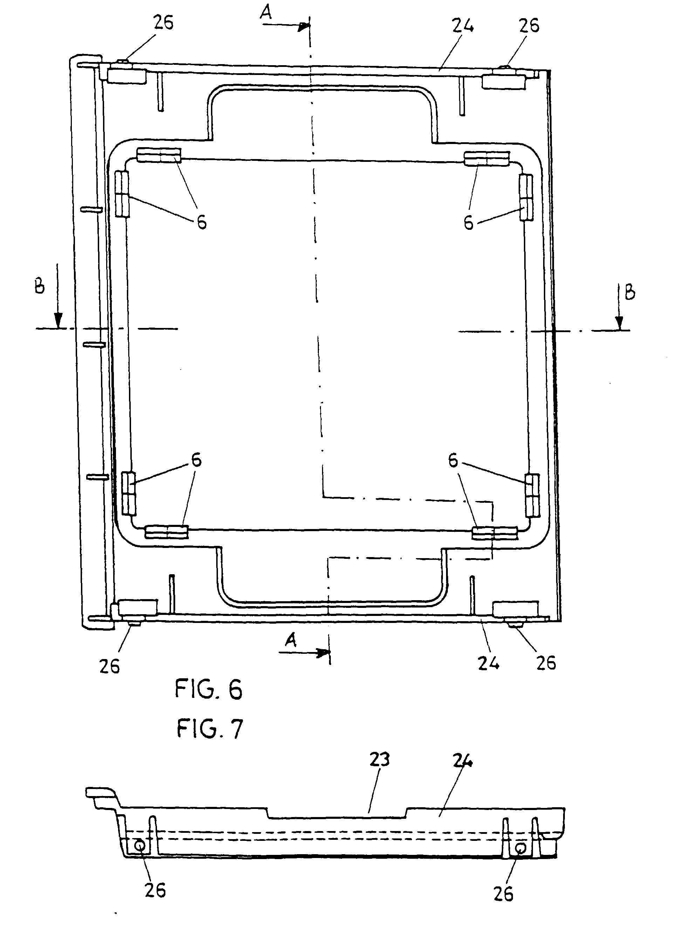

Fig. 1 zeigt einen erfindungsgemäßen Aufbewahrungsbehälter in zusammengebautem Zustand. Ein Bodenteil 1 ist dabei über Nuten 2, welche mit Zapfen 17 eines Deckelteiles 3 in Eingriff sind mit diesem um eine Drehachse 11 drehbar verbunden. Sowohl Bodenteil 1 als auch Deckelteil 3 sind im vorliegenden Beispiel transparent ausgeführt. Im Bodenteil 1 ist ein Einsatz 4 gehalten. Die Befestigung des Einsatzes 4 im Bodenteil 1 erfolgt über in den Seitenwänden des Bodenteiles 1 angeordnete Bohrungen 16 (siehe Fig. 5) und darin eingreifende Zapfen 26, welche am Einsatz 4 angeordnet sind (siehe Fig. 6). Der Einsatz 4 weist eine Ausnehmung 5 auf, an deren Randbereichen flexible Elemente 6 angeordnet sind. Im Deckelteil 3 ist erfindungsgemäß ebenfalls ein Einsatz 7 gehalten, der eine Ausnehmung 8 aufweist. In den Randbereichen der Ausnehmung 8 sind flexible Elemente 9 gehalten. Der Einsatz 7 weist an seinen normal zur Drehachse 11 verlaufenden Seitenwänden 13 Hinterschneidungen 10 auf, die mit Laschen 12, welche am Deckelteil 3 angeordnet sind und sich normal von dessen Seitenkanten ins Innere des Deckelteiles 3 erstrecken, korrespondieren. Durch Aufstecken des Einsatzes 7 auf die Laschen 12 in Richtung in die Zeichenebene rasten die Hinterschneidungen 10 in die Laschen 12 ein.

Selbstverständlich können anstatt dem Laschen/Hinterschneidungssystem auch andere Möglichkeiten zur Befestigung des zweiten Einsatzes 7 im Deckelteil 3 vorgesehen werden. So ist es zum Beispiel möglich wie im Falle des ersten Eisatzes 4 den zweiten Einsatz 7 auch mit Zapfen in im Deckelteil 3 angeordneten Bohrungen zu besfestigen. Für diesen Fall ist jedoch eine Änderung der Spritzgußmatritze für den Deckelteil erforderlich.

Zur Befestigung der Mini Discs im Aufbewahrungsbehälter werden diese jeweils in Richtung in die Zeichenebene hinein in die Ausnehmungen 5,8 gepreßt. Dabei werden die flexiblen Elemente 6,9 auseinandergedrückt und üben auf diese Art und Weise eine Haltekraft auf die Mini Discs aus. Danach kann der erfindungsgemäße Aufbewahrungsbehälter geschlossen werden, ohne daß beim Handling oder beim Transport die Mini Discs herausfallen. Beim Öffnen des erfindungsgemäßen Aufbewahrungsbehälters sind beide Mini Discs gleichzeitig sichtbar.

Fig. 2 zeigt eine Schnittansicht von Fig. 1 entlang der Linie AA allerdings bei geschlossenem Zustand des Aufbewahrungsbehälters. Zur Verdeutlichung sind in dieser Figuren die Mini Discs 14 eingezeichnet. Sehr gut erkennbar ist auch ein Freiraum 15, in den zum Beispiel ein kleines Textbuch eingelegt werden kann.

Fig. 3 zeigt eine Schnittansicht von Fig. 1 entlang der Linie BB allerdings ebenfalls in geschlossenem Zustand des Aufbewahrungsbehälters. Auch hier wurden zur Verdeutlichung der Platzverhältnisse die von den flexiblen Elementen 6,9 gehaltenen Mini Discs 14 eingezeichnet.

Fig. 4 zeigt deutlich Leisten 20, welche entlang der Seitenkanten des Bodenteiles 1 geführt sind. Die Breite der Leisten 20 entspricht im wesentlichen der Dicke der Seitenwände 25 des Deckelteiles 3 und die gesamte Breite des Bodenteiles 1 gemessen zwischen den beiden Außenkanten der Leisten 20 entspricht der Breite des Deckelteiles 3 gemessen zwischen den beiden Außenseiten der Seitenwände 25. Dadurch wird die Drehbewegung beim Schließen des Aufbewahrungsbehälters durch das Aufliegen der Seitenwände 25 an den Leisten 20 gestoppt. Eine Weiterführung der Drehbewegung über diesen definierten Punkt hinaus ist nicht möglich.

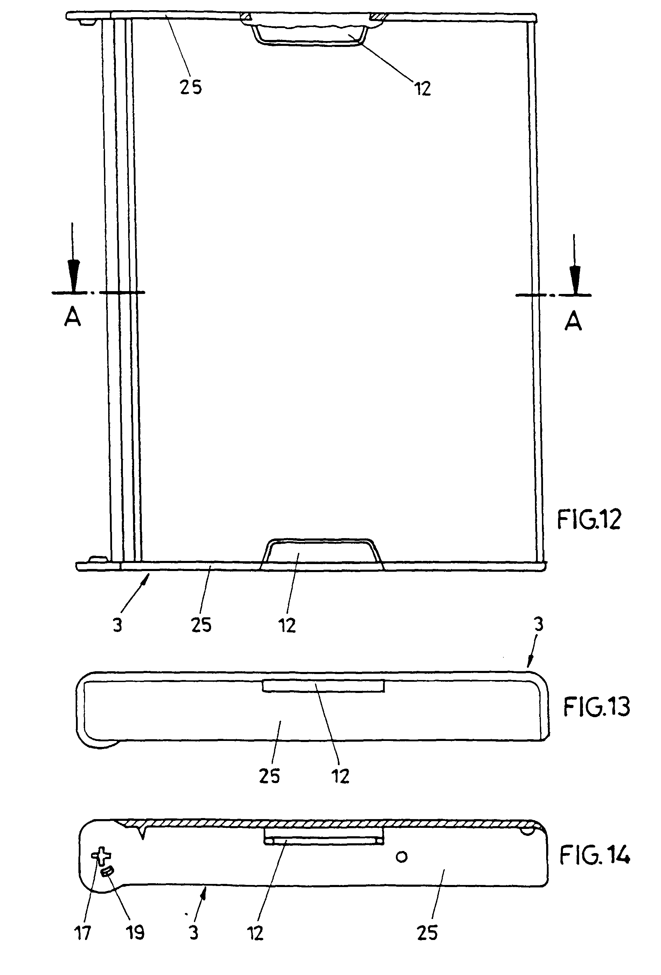

In Fig. 5 sind an den Seitenwänden 21 des Bodenteiles 1 im Bereich der Nuten 2 um diese konzentrisch je eine im wesentlichen halbkreisförmige Nut 18 angeordnet. In diese halbkreisförmigen Nuten 18 greifen wiederum Bolzen 19, welche an den Innenflächen der Seitenwände 25 des Deckelteiles 3 angeordnet sind, ein (siehe Fig. 14). Dies bewirkt eine geführte, stabile Drehbewegung des Deckelteiles 3 gegenüber dem Bodenteil 1. Weiters weisen die Seitenwände 21 in ihrem Mittenbereich Ausnehmungen 22 auf, die Ausnehmungen 23 in den Seitenwänden 24 des Bodeneinsatzes 4 entsprechen (siehe Fig. 7) und die im geschlossenen Zustand erforderlich sind, um zu verhindern, daß die Seitenwände 21,24 die Laschen 12 beim Schließen des Deckelteiles 3 behindern.

## Patentansprüche

1. Aufbewahrungsbehälter für Mini Discs (14) mit einem Bodenteil (1) in dem ein Einsatz (4) gehalten ist, welcher eine Ausnehmung (5) zur Aufnahme einer Mini Disc aufweist, wobei die Mini Disc in deren Eckbereichen vorzugsweise durch in der Ausnehmung (5) gelagerte flexible Elemente (6) reibschlüssig gehalten ist und mit einem Deckelteil (3), welcher im Bodenteil (1) um eine Drehachse (11) drehbar befestigt ist, **dadurch gekennzeichnet,** daß ein zweiter Einsatz (7) im Deckelteil (3) gehalten ist, wobei dieser Einsatz (7) ebenfalls eine Ausnehmung (8) zur Aufnahme einer Mini Disc aufweist und die Mini Disc in deren Eckbereichen vorzugsweise durch in der Ausnehmung (8) gelagerte flexible Elemente (9) reibschlüssig gehalten ist und die Ausnehmung (8) im Einsatz (7) des Deckelteiles (3) der Ausnehmung (5) im Einsatz (4) des Bodenteiles (1) bei geschlossenem Aufbewahrungsbehälter zugewandt ist.

2. Aufbewahrungsbehälter nach Anspruch 1, wobei an den beiden normal zur Drehachse (11) angeordneten Seitenwänden (25) des Deckelteiles (3) mindestens je eine nach innen gerichtete Lasche (12) angebracht ist, **dadurch gekennzeichnet,** daß der zweite Einsatz (7) in mindestens zwei Randbereichen Hinterschneidungen (10) aufweist und der Einsatz (7) im Bereich der Laschen (12) über die Hinterschneidungen (10) zwischen den Laschen (12) und der Grundplatte des Deckelteiles (3) eingerastet ist.

3. Aufbewahrungsbehälter nach Anspruch 1, **dadurch gekennzeichnet,** daß der Deckelteil (3) Bohrungen aufweist und am zweiten Einsatz (7) Zapfen angeordnet sind, die in die Bohrungen des Deckelteiles (3) eingreifen.
